# EUROPÄISCHE PATENTSCHRIFT

(11) **EP 2 934 798 B1**
(45) Veröffentlichungstag und Bekanntmachung des Hinweises auf die Patenterteilung: **08.11.2023**
(21) Anmeldenummer: 13815503.1
(22) Anmeldetag: 20.12.2013
(51) Int. Cl.: B23B 31/113, B23B 51/04, E21B 17/046, B28D 1/04, E21B 10/62

(54) **BOHRKRONE MIT EINEM AUSTAUSCHBAREN SCHNEIDABSCHNITT**
DRILL BIT WITH AN EXCHANGEABLE CUTTING PORTION
COURONNE DE FORAGE POURVUE D'UN SEGMENT DE COUPE INTERCHANGEABLE

(30) Priorität: 21.12.2012 WO PCT/EP2012/076774; 08.05.2013 EP 13166991
(43) Veröffentlichungstag der Anmeldung: 28.10.2015
(73) Patentinhaber: Hilti Aktiengesellschaft, 9494 Schaan (LI)
(72) Erfinder: HOOP, Matthaeus, CH-9492 Eschen (LI); WEBER, Christoph, CH-6345 Neuheim (CH); BRITT, Thomas, CH-8890 Flums (CH); AMMAN, Christoph, CH-9486 Schaanwald (LI)
(74) Vertreter: Hilti Aktiengesellschaft Corporate Intellectual Property
(86) Internationale Anmeldenummer: PCT/EP2013/077697
(87) Internationale Veröffentlichungsnummer: WO 2014/096366

(56) Entgegenhaltungen:
- EP-B1- 0 477 253
- DE-U1- 8 512 878
- DE-U1- 9 302 468
- GB-A- 2 251 046
- JP-A- H0 475 812
- JP-A- 2007 136 643
- JP-U- S59 105 311
- US-A1- 2007 020 056

## Beschreibung

### Technisches Gebiet

Die vorliegende Erfindung betrifft eine Bohrkrone mit einem austauschbaren Schneidabschnitt gemäß dem Oberbegriff des Anspruchs 1.

Unter dem Begriff "Bohrkrone" werden sämtliche Bohrwerkzeuge zusammengefasst, die einen hohlen, zylindrischen Bohrschaft und einen Schneidabschnitt mit einem oder mehreren Schneidelementen aufweisen, beispielsweise Kernbohrkronen und Dosensenker. Abhängig vom Einsatzzweck können die Bohrkronen zusätzliche Elemente, wie beispielsweise einen Tiefenanschlag, der die Bohrtiefe begrenzt, aufweisen.

### Stand der Technik

Bohrkronen bestehen aus einem Schneidabschnitt mit einem oder mehreren Schneidelementen, einem Bohrschaftabschnitt und einem Aufnahmeabschnitt mit Einsteckende. Die Bohrkrone wird über das Einsteckende in der Werkzeugaufnahme eines Kernbohrgerätes befestigt und im Bohrbetrieb vom Kernbohrgerät in einer Drehrichtung um eine Drehachse angetrieben. Bekannte Bohrkronen werden in Bohrkronen mit austauschbarem Schneidabschnitt und Bohrkronen ohne austauschbaren Schneidabschnitt unterteilt, wobei bei den Bohrkronen mit austauschbarem Schneidabschnitt lösbare und nicht-lösbare Verbindungen unterschieden werden. Eine Verbindung wird als lösbar bezeichnet, wenn die Verbindung vom Anwender zerstörungsfrei gelöst werden kann, wie beispielsweise eine Steckverbindung, eine Schraubverbindung oder eine Magnetverbindung. Eine Verbindung wird als nichtlösbar bezeichnet, wenn der Anwender die Verbindung nur durch Zerstörung der Verbindungsmittel lösen kann, wie beispielsweise eine Lötverbindung, eine Schweißverbindung, eine Nietverbindung oder eine Klebeverbindung.

Bei der in US 3,888,320 A offenbarten Bohrkrone sind der Schneidabschnitt und der Bohrschaftabschnitt über eine lösbare Steck-Dreh-Verbindung miteinander verbunden. Der Schneidabschnitt umfasst einen Ringabschnitt, der an einem ersten Ende mit mehreren Schneidelementen verbunden ist und an einem zweiten Ende ein äußeres Steckelement und eine ringförmige Anschlagschulter aufweist. Der Bohrschaftabschnitt umfasst einen zylinderförmigen Bohrschaft, der an einem, dem Schneidabschnitt zugewandten Ende ein inneres Steckelement mit einer Stirnfläche aufweist. Die Steckelemente bilden in einer Steckrichtung parallel zur Drehachse eine Steckverbindung. Das äußere Steckelement weist an der Innenseite mehrere Stiftelemente auf, die in einer Ebene senkrecht zur Drehachse radial nach innen gerichtet sind. Das innere Steckelement weist mehrere schlitzförmige Ausnehmungen in L-Form auf, in die die Stiftelemente eingeführt werden. Die L-förmigen Ausnehmungen bestehen aus einem Querschlitz, der senkrecht zur Drehachse verläuft, und einem Verbindungsschlitz, der parallel zur Drehachse verläuft und den Querschlitz mit einer Unterkante des inneren Steckelementes verbindet.

Bei der bekannten Bohrkrone mit austauschbarem Schneidabschnitt besteht bei geschlossener Steck-Dreh-Verbindung zwischen dem Schneidabschnitt und dem Bohrschaftabschnitt in einer Richtung parallel zur Drehachse ein axiales Spiel. Zwischen der Stirnfläche des inneren Steckelementes und der Anschlagschulter des äußeren Steckelementes bildet sich ein Spalt, so dass die Kraftübertragung vom Bohrschaftabschnitt auf den Schneidabschnitt ausschließlich über die Stiftelemente erfolgt. Der Spalt führt außerdem dazu, dass ein Kühl- und Spülmedium nicht vollständig an die Bearbeitungsstelle befördert wird, sondern in den Spalt an der Innenseite der Bohrkrone fehlgeleitet werden kann.

Ein weiterer Nachteil der bekannten Bohrkrone mit austauschbarem Schneidabschnitt zeigt sich, wenn sich die Bohrkrone im Untergrund verklemmt hat. Beim Kernbohren kommt es regelmäßig dazu, dass sich die Bohrkrone während des Bohrens im Untergrund verklemmt und vom Bediener gelöst werden muss. Zum Lösen der verklemmten Bohrkrone wird bei ständergeführten Kernbohrgeräten die Bohrkrone entgegen der Drehrichtung angetrieben und vom Bohrständer eine Zugkraft, die der Bohrrichtung entgegen gerichtet ist, auf die Bohrkrone ausgeübt. Der Bediener versucht die Bohrkrone durch manuelles Drehen mit Hilfe eines Werkzeugschlüssels und gleichzeitiges Ziehen mit Hilfe des Bohrständers aus dem Untergrund zu befreien. Bei den L-förmigen Ausnehmungen besteht die Gefahr, dass der Bediener den Bohrschaftabschnitt um die Drehachse dreht, bis das Stiftelement am Verbindungsschlitz anschlägt, und gleichzeitig das Handrad des Bohrständers betätigt, so dass das Stiftelement aus dem Verbindungsschlitz bewegt wird. Sobald die Steck-Dreh-Verbindung zwischen Schneidabschnitt und Bohrschaftabschnitt gelöst ist, muss der Schneidabschnitt anderweitig aus dem Untergrund befreit werden, beispielsweise durch Abtragen des Untergrundes.

JP 59 105311 U offenbart eine bekannte Bohrkrone mit einem Schneidabschnitt und einem Bohrschaftabschnitt. Der Schneidabschnitt weist einen Ringabschnitt auf, der an einem ersten Ende mit einem oder mehreren Schneidelementen verbunden ist und an einem zweiten Ende ein äußeres Steckelement und eine Anschlagschulter aufweist. Der Bohrschaftabschnitt weist einen zylinderförmigen Bohrschaft auf, der an einem, dem Schneidabschnitt zugewandten Ende ein inneres Steckelement mit einer Stirnfläche aufweist. Das innere und äussere Steckelement bilden in einer Steckrichtung parallel zur Drehachse eine Steckverbindung und sind zusätzlich über mindestens ein Stiftelement verbindbar, das in mindestens eine schlitzförmige Ausnehmung bewegbar ist.

### Darstellung der Erfindung

Die Aufgabe der vorliegenden Erfindung besteht darin, eine Bohrkrone mit austauschbarem Schneidabschnitt zu entwickeln, bei der die Stabilität beim Bohren und die Standfestigkeit gegenüber einer Zugbelastung durch einen Bohrständer erhöht sind. Außerdem soll das Risiko reduziert werden, dass sich beim Entfernen einer verklemmten Bohrkrone aus dem Untergrund die Steck-Dreh-Verbindung unbeabsichtigt öffnet und der Bohrschaftabschnitt ohne den Schneidabschnitt aus dem Untergrund entfernt wird.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass sich die mindestens eine schlitzförmige Ausnehmung von der äußeren Mantelfläche zur inneren Mantelfläche erstreckt, an der Außenseite des inneren Steckelementes eine Nase angeordnet ist und das äußere Steckelement eine Nut aufweist, wobei die Nase und Nut im verbundenen Zustand in axialer Richtung eine formschlüssige Verbindung bilden.

Durch die zusätzliche formschlüssige Verbindung zwischen dem Bohrschaftabschnitt und dem Schneidabschnitt kann das Risiko reduziert werden, dass sich die lösbare Verbindung zwischen dem Bohrschaftabschnitt und dem Schneidabschnitt beim Entfernen einer verklemmten Bohrkrone aus dem Untergrund unbeabsichtigt öffnet. Die Ausbildung der formschlüssigen Verbindungsmittel als Nase und Nut erlaubt eine einfache und zuverlässige Verbindung, die ein Abziehen des Bohrschaftabschnittes vom Schneidabschnitt erschwert. Die Haltekraft der Verbindung lässt sich über die Geometrie der Nase und Nut an das Einsatzgebiet der Bohrkrone anpassen.

Die Steck-Dreh-Verbindung der Steckelemente verbessert die Stabilität und Standfestigkeit der Bohrkrone gegenüber Zugbelastung. Der Bohrkronenabschnitt, der die schlitzförmigen Ausnehmungen aufweist, ist anfälliger gegenüber einer Verformung durch Zugbelastung als der Bohrkronenabschnitt, an dem die Stiftelemente befestigt sind. Die Anordnung der schlitzförmigen Ausnehmungen am austauschbaren Schneidabschnitt hat den Vorteil, dass der instabilere der beiden Bohrkronenabschnitte regelmäßig ausgetauscht wird. Das Risiko einer Verformung durch Zugbelastung steigt mit steigendem Anteil der schlitzförmigen Ausnehmungen am Umfang des Steckelementes. Da der Durchmesser des äußeren Steckelementes grösser als der Durchmesser des inneren Steckelementes ist, steht am äußeren Steckelement mehr Umfang für die schlitzförmigen Ausnehmungen zur Verfügung bzw. der Anteil der Ausnehmungen am Umfang ist geringer. Die Bohrkrone ist stabiler, wenn die schlitzförmigen Ausnehmungen am äußeren Steckelement vorgesehen sind.

Durch die Anordnung der Stiftelemente am inneren Steckelement und die Anordnung der schlitzförmigen Ausnehmungen am äußeren Steckelement kann die Bohrkrone an der Innenseite dicht ausgebildet und die Fehlleitung eines Kühl- und Spülmediums verhindert werden. Das beispielsweise über das Einsteckende der Bohrkrone zugeführte Kühl- und Spülmedium strömt bei einer dichten Bohrkrone vollständig an die Bearbeitungsstelle und sorgt für eine Kühlung der Schneidelemente und einen Abtransport von Bohrklein. Die erfindungsgemäße Bohrkrone ermöglicht außerdem, dass der Bediener das Öffnen und Schließen der Steck-Dreh-Verbindung überwachen kann. Diese Überwachung ist nicht möglich oder nur eingeschränkt möglich, wenn die schlitzförmigen Ausnehmungen am inneren Steckelement vorgesehen sind.

Die Stirnfläche des inneren Steckelementes liegt im verbundenen Zustand an der Anschlagschulter des äußeren Steckelementes an. Die Kraftübertragung vom Bohrschaftabschnitt auf den Schneidabschnitt erfolgt beim Bohren über die Stirnfläche und die Anschlagschulter. Die Gefahr einer Verformung des äußeren Steckelementes ist reduziert, wenn die Kraftübertragung nicht über die Stiftelemente erfolgt, so dass die erfindungsgemäße Bohrkrone eine höhere Stabilität aufweist. Die Anschlagschulter kann ringförmig oder ringabschnittsförmig ausgebildet sein. Durch eine plane Auflage der Stirnfläche an einer ringförmigen Anschlagschulter ist die Bohrkrone an der Innenseite dicht ausgebildet, so dass die Fehlleitung eines Kühl- und Spülmediums verhindert wird. Das beispielsweise über das Einsteckende der Bohrkrone zugeführte Kühl- und Spülmedium strömt vollständig an die Bearbeitungsstelle und sorgt für eine Kühlung der Schneidelemente und einen Abtransport von Bohrklein.

Besonders bevorzugt ist die Länge des inneren Steckelementes grösser als die Länge des äußeren Steckelementes. Durch die Längendifferenz zwischen dem inneren und äußeren Steckelement ist sichergestellt, dass die Stirnfläche des inneren Steckelementes an der Anschlagschulter des äußeren Steckelementes anliegt und beim Bohren eine definierte Kraftübertragung vom Bohrschaftabschnitt auf den Schneidabschnitt erfolgt.

Besonders bevorzugt beträgt die Länge des äußeren Steckelementes mindestens 18 mm. Bei einer Mindestlänge von 18 mm für das äußere Steckelement ist eine ausreichende Standfestigkeit des Schneidabschnittes sichergestellt. Die schlitzförmigen Ausnehmungen lassen sich am äußeren Steckelement in einer Höhe positionieren, dass der Schneidabschnitt standfest gegenüber den auftretenden Zugbelastungen beim Lösen einer verklemmten Bohrkrone mit Hilfe eines Bohrständers ist.

Dabei ist die Länge des äußeren Steckelementes besonders bevorzugt nicht grösser als 28 mm. Bis zu einer Länge von 28 mm für das äußere Steckelement wird die Standfestigkeit des Schneidabschnittes gegenüber einer Zugbelastung verbessert. Größere Längen für das äußere Steckelement haben keinen oder nur einen geringen Einfluss auf die Standfestigkeit des Schneidabschnittes gegenüber einer Zugbelastung und führen lediglich zu erhöhten Material- und Bearbeitungskosten.

In einer bevorzugten Ausführung sind das äußere und innere Steckelement ringförmig ausgebildet, wobei die Differenz zwischen einem Innendurchmesser des äußeren Steckelementes und einem Außendurchmesser des inneren Steckelementes grösser als 0.11 mm ist. Durch den Spalt, der sich zwischen dem äußeren und inneren Steckelement bildet, ist sichergestellt, dass die Stirnfläche des inneren Steckelementes an der Anschlagschulter des äußeren Steckelementes anliegt. Die Bohrkrone ist an der Innenseite dicht ausgebildet, so dass die Zufuhr eines flüssigen oder gasförmigen Kühl- und Spülmediums zu den Schneidelementen gewährleistet ist. Außerdem erfolgt eine definierte Kraftübertragung vom Kernbohrgerät über die Stirnfläche des Bohrschaftabschnittes auf die Anschlagschulter des Schneidabschnittes.

In einer bevorzugten Ausführung der Bohrkrone sind an der Außenseite des inneren Steckelementes drei oder mehr Stiftelemente befestigt und das äußere Steckelement weist drei oder mehr schlitzförmige Ausnehmungen auf, wobei die Anzahl der Ausnehmungen grösser oder gleich der Anzahl der Stiftelemente ist. Bei der erfindungsgemäßen Bohrkrone erfolgt die Kraftübertragung von der Stirnfläche des inneren Steckelementes auf die Anschlagschulter des äußeren Steckelementes und die Drehmomentübertragung erfolgt über die Stiftelemente auf das äußere Steckelement. Dabei sind die Stiftelemente besonders bevorzugt gleichmäßig um die Drehachse der Bohrkrone verteilt. Durch die gleichmäßige Verteilung der Stiftelemente ist keine Zuordnung zwischen den Stiftelementen und den Ausnehmungen gegeben und ein Stiftelement kann in jede Ausnehmung eingeführt werden.

Die Anzahl der schlitzförmigen Ausnehmungen muss grösser oder gleich der Anzahl der Stiftelemente sein. Zum Schließen der Steck-Dreh-Verbindung muss für jedes Stiftelement eine schlitzförmige Ausnehmung vorgesehen sein. Die Ausführung einer Bohrkrone, bei der die Anzahl der Ausnehmungen grösser als die Anzahl der Stiftelemente ist, hat den Nachteil, dass die Stabilität des Schneidabschnittes unnötig reduziert ist; diese Ausführung eignet sich, wenn überhaupt, für Bohrkronen mit sehr großen Durchmessern, da bei diesen Bohrkronen der Anteil der Ausnehmungen am Umfang des äußeren Steckelementes geringer ist als bei Bohrkronen mit kleineren Durchmessern.

Besonders bevorzugt sind an der Außenseite des inneren Steckelementes sechs Stiftelemente befestigt und das äußere Steckelement weist sechs oder mehr schlitzförmige Ausnehmungen auf. Eine Drehverbindung mit sechs Steckelementen, die einen Stiftdurchmesser von 6 mm aufweisen, eignet sich zur Drehmomentübertragung für Bohrkronen mit unterschiedlichen Durchmessern, beispielsweise von 50 mm bis 250 mm.

In einer bevorzugten Ausführung der Bohrkrone weisen die Stiftelemente senkrecht zur Drehachse eine Stifthöhe auf, wobei die Stifthöhe zwischen 68 % und 89 % der Schaftbreite des Bohrschaftes beträgt. Die Breite des inneren Steckelementes beträgt bevorzugt ca. 50 % der Bohrschaftbreite. Mit zunehmender Stifthöhe vergrößert sich die Fläche zur Drehmomentübertragung. Außerdem wird die Standfestigkeit gegenüber Zugbelastung verbessert.

Besonders bevorzugt sind die Stiftelemente kreiszylinderförmig mit einem Stiftradius ausgebildet, wobei der Stiftradius zwischen 2.5 und 5 mm beträgt. Die Drehmomentübertragung vom Bohrschaftabschnitt auf den Schneidabschnitt erfolgt über die Stiftelemente und das äußere Steckelement. Je grösser der Stiftradius der Stiftelemente ist, umso weniger Stiftelemente sind für die Drehmomentübertragung erforderlich.

In einer bevorzugten Ausführung weisen die schlitzförmigen Ausnehmungen senkrecht zur Drehachse einen Querschlitz auf, wobei der Querschlitz über einen Verbindungsschlitz mit einer Oberkante des äußeren Steckelementes verbunden ist. Das äußere Steckelement ist im Bereich der Verbindungsschlitze offen ausgebildet. Die Stiftelemente werden über den Verbindungsschlitz eingeführt, wobei der Verbindungsschlitz parallel oder schräg zur Drehachse angeordnet sein kann. Die Drehmomentübertragung vom Stiftelement auf das äußere Steckelement erfolgt im Querschlitz.

Bevorzugt weist der Querschlitz parallel zur Drehachse einen unteren Abstand zum Ringabschnitt von mindestens 3 mm auf. Bei einem Mindestabstand von 3 mm ist eine ausreichende Standfestigkeit des Schneidabschnittes gegenüber einer Zugbelastung beim Lösen einer verklemmten Bohrkrone mit Hilfe eines Bohrständers sichergestellt.

Dabei ist der untere Abstand des Querschlitzes zum Ringabschnitt besonders bevorzugt nicht grösser als 5 mm. Bis zu einem Abstand von 5 mm wird die Standfestigkeit des Schneidabschnittes gegenüber einer Zugbelastung verbessert. Größere Abstände haben keinen oder nur einen geringen Einfluss auf die Standfestigkeit des Schneidabschnittes gegenüber einer Zugbelastung und führen lediglich zu erhöhten Material- und Bearbeitungskosten.

In einer Weiterentwicklung der Bohrkrone weist der Querschlitz einen Mitnahmebereich und einen Sicherungsbereich auf, wobei der Mitnahmebereich auf einer, der Drehrichtung zugewandten, Seite des Verbindungsschlitzes mit dem Verbindungsschlitz verbunden ist und der Sicherungsbereich auf einer, der Drehrichtung abgewandten, Seite des Verbindungsschlitzes mit dem Verbindungsschlitz verbunden ist. Die Drehmomentübertragung vom Bohrschaftabschnitt auf den Schneidabschnitt erfolgt über die Stiftelemente und den Mitnahmebereich. Auf der, dem Mitnahmebereich gegenüberliegenden, Seite des Verbindungsschlitzes ist der Sicherungsbereich angeordnet. Der Sicherungsbereich reduziert das Risiko, dass beim Lösen einer verklemmten Bohrkrone aus dem Untergrund die Steck-Dreh-Verbindung zwischen dem Bohrschaftabschnitt und dem Schneidabschnitt unbeabsichtigt geöffnet wird. Der Bediener versucht die verklemmte Bohrkrone durch Drehen des Bohrschaftabschnittes mit Hilfe eines Werkzeugschlüssels um die Drehachse und gleichzeitiges Ziehen mit Hilfe des Bohrständers aus dem Untergrund zu befreien. Die Praxis hat gezeigt, dass Bediener vor allem dann am Bohrschaftabschnitt ziehen, wenn das Stiftelement am Querschlitz anschlägt. Wenn das Stiftelement bei der erfindungsgemäßen Bohrkrone am Mitnahmebereich oder am Sicherungsbereich anschlägt, besteht keine Gefahr, dass die Steck-Dreh-Verbindung geöffnet wird. Bei der erfindungsgemäßen Bohrkrone wird die Steck-Dreh-Verbindung nur dann geöffnet, wenn der Bediener genau in dem Moment am Bohrschaftabschnitt zieht, wenn sich das Stiftelement über dem Verbindungsschlitz befindet. Das Risiko, die Steck-Dreh-Verbindung unbeabsichtigt zu öffnen, ist gegenüber schlitzförmigen Ausnehmungen in L-Form deutlich reduziert.

Bevorzugt ist die Breite des Mitnahmebereiches nicht kleiner als der Stiftradius plus 1.5 mm. Bei dieser Mindestbreite für den Mitnahmebereich ist eine ausreichende Standfestigkeit des Schneidabschnittes gegenüber einer Zugbelastung durch einen Bohrständer sichergestellt. Die Stiftelemente liegen am Mitnahmebereich an und brechen nicht aus dem Mitnahmebereich aus.

Dabei ist die Breite des Mitnahmebereiches besonders bevorzugt nicht grösser als der Stiftradius plus 3 mm. Bis zu einer Breite des halben Stiftdurchmessers plus 3 mm wird die Standfestigkeit des Schneidabschnittes gegenüber einer Zugbelastung durch einen Bohrständer verbessert. Größere Breiten haben keinen oder nur einen geringen Einfluss auf die Standfestigkeit des Schneidabschnittes gegenüber einer Zugbelastung und reduzieren die Stabilität des Schneidabschnittes unnötig.

In einer ersten bevorzugten Variante stimmen die Breite des Mitnahmebereiches und die Breite des Sicherungsbereiches überein. Dabei weisen der Mitnahmebereich und der Sicherungsbereich eine Mindestbreite von Stiftradius plus 1.5 mm auf. Diese Ausführung bietet sich vor allem für Bohrkronen mit großen Durchmessern an, bei denen der Anteil der Querschlitze am Umfang klein ist.

In einer zweiten bevorzugten Variante ist die Breite des Mitnahmebereiches grösser als die Breite des Sicherungsbereiches. Dabei weisen der Mitnahmebereich und der Sicherungsbereich eine Mindestbreite von Stiftradius plus 1.5 mm auf. Diese Ausführung bietet sich vor allem für Bohrkronen mit kleinen Durchmessern an, bei denen der Anteil der Querschlitze am Umfang groß ist.

Bevorzugt beträgt die Höhe des Verbindungsschlitzes parallel zur Drehachse mindestens 10 mm. Bei einer Höhe von mindestens 10 mm ist eine ausreichende Standfestigkeit des Schneidabschnittes gegenüber einer Zugbelastung durch einen Bohrständer sichergestellt.

Dabei ist die Höhe des Verbindungsschlitzes parallel zur Drehachse besonders bevorzugt nicht grösser als 13 mm. Bis zu einer Höhe von 13 mm wird die Standfestigkeit des Schneidabschnittes gegenüber einer Zugbelastung durch einen Bohrständer verbessert. Größere Höhen haben keinen oder nur einen geringen Einfluss auf die Standfestigkeit des Schneidabschnittes gegenüber einer Zugbelastung durch einen Bohrständer und führen lediglich zu erhöhten Material- und Bearbeitungskosten.

In einer Weiterentwicklung der Bohrkrone weist der Ringabschnitt einen Führungsabschnitt auf, wobei der Führungsabschnitt parallel zur Längsachse bündig an eine Außenkante, eine Innenkante oder an eine Außen- und Innenkante der Schneidelemente anschließt. Durch den bündigen Anschluss des Führungsabschnittes an die Schneidelemente bildet der Führungsabschnitt beim Bohren eine Führung für die Schneidelemente und stabilisiert die Schneidelemente. Dabei kann die Führung an der Außenseite der Bohrkrone über den, das Bohrloch umgebenden Untergrund oder an der Innenseite der Bohrkrone über den Bohrkern erfolgen.

Bevorzugt ist die Länge des Führungsabschnittes parallel zur Längsachse kleiner als 4 mm. Ein Führungsabschnitt, der kleiner als 4 mm ist, behindert die Zufuhr eines Kühl- und Spülmediums nicht oder zumindest nicht wesentlich.

Bevorzugt ist die Nase in axialer Richtung zwischen den Stiftelementen und dem Bohrschaft angeordnet und die Nut ist in axialer Richtung auf Höhe der schlitzförmigen Ausnehmungen angeordnet. Zwischen den schlitzförmigen Ausnehmungen des äußeren Steckelementes entstehen Abschnitte, die eine federnde Wirkung zeigen. Über die Anzahl und axiale Höhe der schlitzförmigen Ausnehmungen und die Länge des äußeren Steckelementes kann die federnde Wirkung eingestellt werden. Um den Bohrschaftabschnitt vom Schneidabschnitt zu trennen, wird auf die Stirnfläche des äußeren Steckelementes mit Hilfe eines Werkzeuges in axialer Richtung eine Kraft ausgeübt. Durch die Krafteinwirkung wird der federnde Abschnitt des äußeren Steckelementes ausgelenkt und die formschlüssige Verbindung zwischen Nase und Nut kann gelöst werden. Je grösser der Abstand der Nut zu der Anschlagschulter des äußeren Steckelementes ist, umso grösser ist die Auslenkung des federnden Abschnittes. Besonders bevorzugt ist die Nut ringförmig ausgebildet und in einer Ebene senkrecht zur Drehachse angeordnet. Eine ringförmig ausgebildete Nut, die auf Höhe der schlitzförmigen Ausnehmungen angeordnet ist, unterstützt die federnde Wirkung der Abschnitte des äußeren Steckelementes zwischen den schlitzförmigen Ausnehmungen.

Als axiale Richtung ist eine Richtung parallel zur Drehachse der Bohrkrone definiert. Im verbundenen Zustand der Bohrkronenabschnitte fällt die Drehachse der Bohrkrone mit den Längsachsen der Bohrkronenabschnitte, Schneidabschnitt und Bohrschaftabschnitt, zusammen. Als radiale Ebene ist eine Ebene senkrecht zur Drehachse definiert und eine radiale Richtung ist eine Richtung, die in der radialen Ebene verläuft und die Drehachse der Bohrkrone bzw. die Längsachse der Bohrkronenabschnitte schneidet.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der

Zeichnung und/oder den Ansprüchen offenbarten Merkmale, insofern sich die Merkmale nicht widersprechen und soweit den Schutzumfang der unabhängigen Ansprüche nicht verlassen wird.

Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine Bohrkrone mit einem Schneidabschnitt und einem Bohrschaftabschnitt nicht Teil der Erfindung im nicht-verbundenen Zustand (FIG. 1A) und im verbundenen Zustand (FIG. 1B);
- FIGN. 2A, B: den Bohrschaftabschnitt der in FIG. 1 gezeigten Bohrkrone in einem Längsschnitt entlang der Schnittebene A-A in FIG. 1A (FIG. 2A) und das Steckelement des Bohrschaftabschnittes in vergrößerter Darstellung (FIG. 2B);
- FIGN. 3A, B: den Schneidabschnitt der in FIG. 1 gezeigten Bohrkrone in einem Längsschnitt (FIG. 3A) und das Steckelement des Schneidabschnittes in vergrößerter Darstellung (FIG. 3B);
- FIGN. 4A, B: den Schneidabschnitt in einem Längsschnitt entlang der Schnittebene B-B in FIG. 1A (FIG. 4A) und entlang der Schnittebene C-C in FIG. 1B (FIG. 4B); und
- FIG. 5: eine erfindungsgemäße Bohrkrone mit einem Schneidabschnitt und einem Bohrschaftabschnitt, die in axialer Richtung über eine zusätzliche formschlüssige Verbindung als Abziehsicherung verbunden sind.

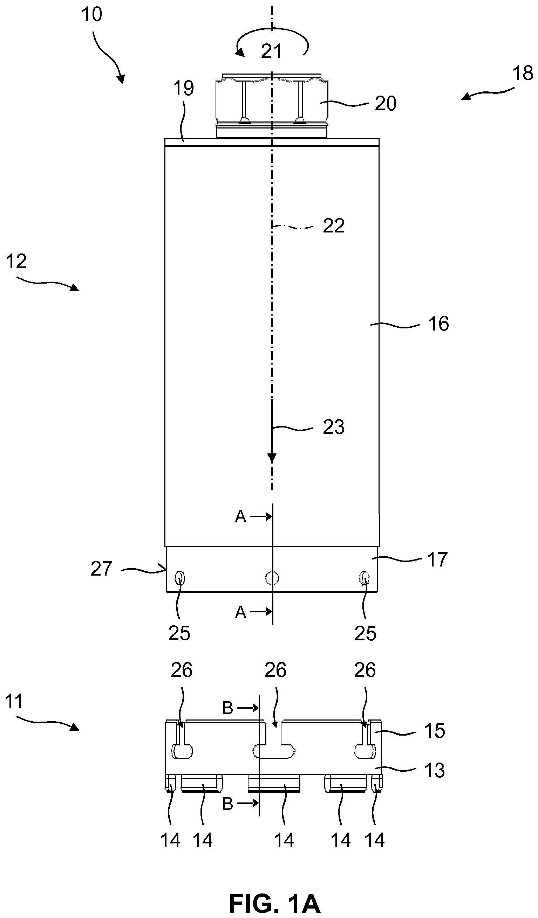

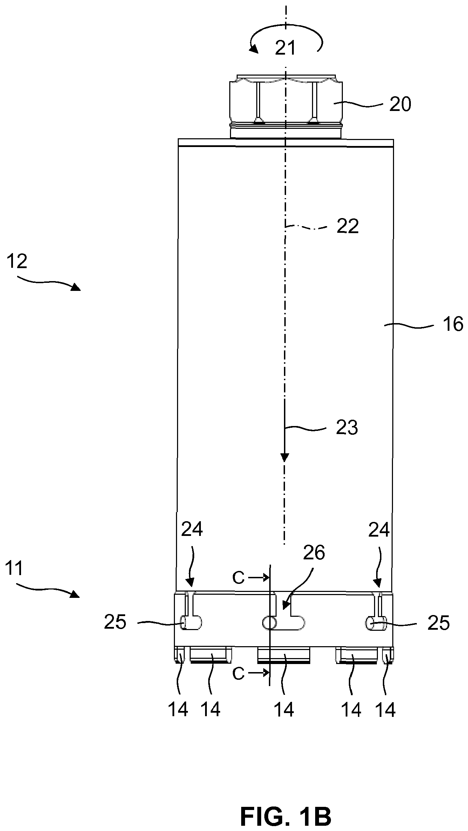

**FIGN. 1A****, B** zeigen eine Bohrkrone **10** mit einem Schneidabschnitt **11,** der über eine lösbare Steck-Dreh-Verbindung mit einem Bohrschaftabschnitt **12** verbunden ist. Dabei zeigt FIG. 1A den Schneidabschnitt 11 und den Bohrschaftabschnitt 12 im nicht-verbundenen Zustand mit geöffneter Steck-Dreh-Verbindung und FIG. 1B den Schneidabschnitt 11 und den Bohrschaftabschnitt 12 im verbundenen Zustand mit geschlossener Steck-Dreh-Verbindung.

Der Schneidabschnitt 11 umfasst einen Ringabschnitt **13,** der an einem ersten Ende mit mehreren Schneidelementen **14** verbunden ist und an einem zweiten Ende ein erstes Steckelement **15** aufweist. Dabei ist das erste Steckelement als äußeres Steckelement 15 ausgebildet. Die Schneidelemente 14 sind mit dem Ringabschnitt 13 verschweißt, verlötet, verschraubt oder in einer anderen geeigneten Befestigungsart am Ringabschnitt 13 befestigt. Der Schneidabschnitt 11 kann anstatt mehrerer Schneidelemente 14 auch ein einzelnes als Schneidhülse ausgebildetes Schneidelement aufweisen, das mit dem Ringabschnitt 13 verbunden ist.

Der Bohrschaftabschnitt 12 umfasst einen zylinderförmigen Bohrschaft **16,** der an einem, dem Schneidabschnitt 11 zugewandten, Ende ein zweites Steckelement **17** aufweist und an einem, dem Schneidabschnitt 11 abgewandten, Ende mit einem Aufnahmeabschnitt **18** verbunden ist. Dabei ist das zweite Steckelement als inneres Steckelement 17 ausgebildet. Der Aufnahmeabschnitt 18 umfasst einen Deckel **19** und ein Einsteckende **20.** Die Bohrkrone 10 wird über das Einsteckende 20 in der Werkzeugaufnahme eines Kernbohrgerätes befestigt. Im Bohrbetrieb wird die Bohrkrone 10 vom Kernbohrgerät in einer Drehrichtung **21** um eine Drehachse **22** angetrieben und in einer Bohrrichtung **23** parallel zur Drehachse 22 in den zu bearbeitenden Untergrund bewegt. Die Drehachse 22 verläuft koaxial zu einer Längsachse des Bohrschaftes 16 und einer Längsachse des Ringabschnittes 13. Die Bohrkrone 10 weist senkrecht zur Drehachse 22 einen kreisförmigen Querschnitt auf, alternativ können erfindungsgemäße Bohrkronen andere geeignete Querschnitte, wie beispielsweise einen mehreckigen Querschnitt, aufweisen.

Der Schneidabschnitt 11 ist über eine Steck-Dreh-Verbindung **24** mit dem Bohrschaftabschnitt 12 verbunden (FIG. 1B). Als "Steck-Dreh-Verbindung" werden Verbindungen von zwei Verbindungselementen bezeichnet, die in mindestens einer Richtung eine Steckverbindung bilden, wobei die gesteckten Verbindungselemente zusätzlich über eine Drehverbindung verbunden werden. Dabei können die Steckverbindung und die Drehverbindung nacheinander oder gleichzeitig geschlossen werden. Die Steck-Dreh-Verbindung 24 muss den Schneidabschnitt 11 und den Bohrschaftabschnitt 12 in sämtlichen Translations- und Drehrichtungen miteinander verbinden. Der Schneidabschnitt 11 muss gegen Translationen in Bohrrichtung 23, entgegen der Bohrrichtung 23 und radial zur Bohrrichtung 23 sowie gegen Drehungen um die Drehachse 22 gesichert sein.

Der Schneidabschnitt 11 wird mit dem äußeren Steckelement 15 auf das innere Steckelement 17 des Bohrschaftabschnittes 12 gesteckt, wobei die Steckrichtung der Steckverbindung parallel zur Drehachse 22 verläuft. Die Steckverbindung der Steckelemente 15, 17 sichert den Schneidabschnitt 11 gegen Translationen entgegen der Bohrrichtung 23 und radial zur Drehachse 22. Über die Drehverbindung der Steckelemente 15, 17 muss der Schneidabschnitt 11 gegen eine Drehung um die Drehachse 22 und gegen eine Translation in Bohrrichtung 23 gesichert werden. Die Drehverbindung umfasst sechs Stiftelemente **25,** die in sechs schlitzförmige Ausnehmungen **26** eingeführt werden. Die sechs Stiftelemente 25 sind an der Außenseite **27** des inneren Steckelementes 17 befestigt und die sechs schlitzförmigen Ausnehmungen 26 sind im äußeren Steckelement 15 vorgesehen. Die Stiftelemente 25 und die Ausnehmungen 26 sind gleichmäßig um die Drehachse 22 verteilt angeordnet. Durch die gleichmäßige Verteilung ist keine Zuordnung zwischen den Stiftelementen 25 und den Ausnehmungen 26 gegeben und ein Stiftelement 25 kann in jede Ausnehmung 26 eingeführt werden.

Der Schneidabschnitt 11 lässt sich vom Bediener einfach und schnell mit dem Bohrschaftabschnitt 12 verbinden. Dazu wird der Schneidabschnitt 11 mit dem äußeren Steckelement 15 so auf das innere Steckelement 17 des Bohrschaftabschnittes 12 gesteckt, dass die Stiftelemente 25 in den schlitzförmigen Ausnehmungen 26 angeordnet sind. Der Schneidabschnitt 11 wird in Steckrichtung bewegt und anschließend durch eine Drehung um die Drehachse 22 gesichert.

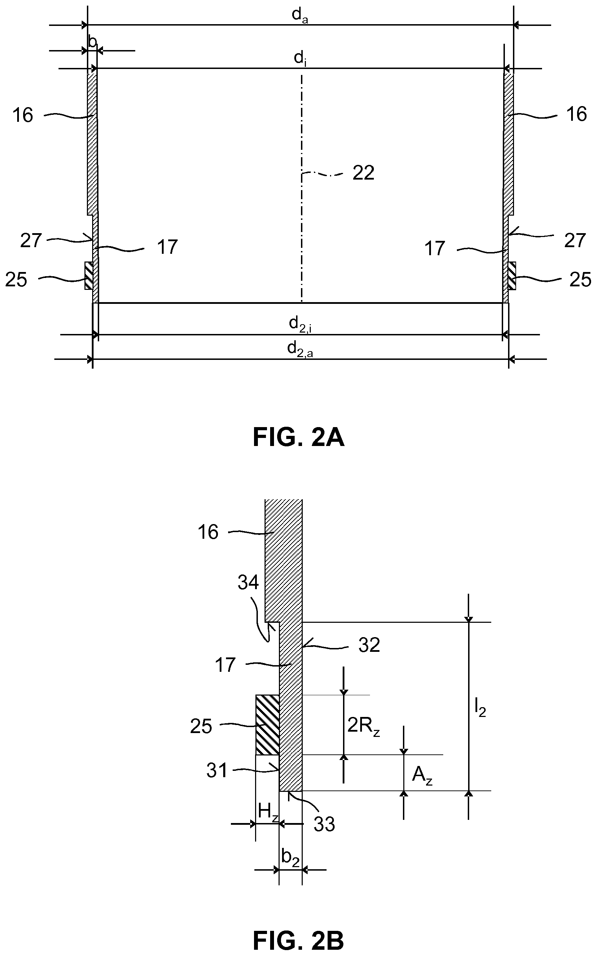

**FIGN. 2A****, B** zeigen den Bohrschaftabschnitt 12 der Bohrkrone 10 in einem Längsschnitt entlang der Schnittebene A-A in FIG. 1A. Dabei zeigt FIG. 2A den Bohrschaftabschnitt 12 und
FIG. 2B das als inneres Steckelement ausgebildete zweite Steckelement 17 in vergrößerter Darstellung.

Der Bohrschaftabschnitt 12 umfasst den zylinderförmigen Bohrschaft 16 und das innere Steckelement 17, die monolithisch ausgebildet sind. Alternativ zur monolithischen Ausbildung kann das innere Steckelement 17 als separates Teil ausgebildet sein und anschließend mit dem Bohrschaft 16 verbunden werden. Auf der Außenseite 27 des inneren Steckelementes 17 sind die Stiftelemente 25 befestigt. Die Stiftelemente 25 und das innere Steckelement 17 können aus verschiedenen Materialien hergestellt und miteinander verbunden sein oder sie bestehen aus dem gleichen Material und die Stiftelemente 25 werden durch Umformverfahren, wie Prägen oder Durchsetzen, erzeugt.

Der Bohrschaft 16 weist senkrecht zur Drehachse 22 einen Außendurchmesser **dₐ**, einen Innendurchmesser **dᵢ** und eine Bohrschaftbreite **b**, b = (d_{A} - d_{I}) / 2, auf. Das innere Steckelement 17 weist senkrecht zur Drehachse 22 einen Außendurchmesser **d_{2,a}** und einen Innendurchmesser **d_{2,i}** auf. Dabei entspricht der Innendurchmesser d_{2,i} des inneren Steckelementes 17 dem Innendurchmesser dᵢ des Bohrschaftes 16 und der Außendurchmesser d_{2,a} des inneren Steckelementes 17 ist kleiner als der Außendurchmesser dₐ des Bohrschaftes 16, so dass sich an der Außenseite des Bohrschaftabschnittes 12 eine ringförmige Stufe ausbildet.

FIG. 2B zeigt das innere Steckelement 17 in vergrößerter Darstellung. Das innere Steckelement 17 umfasst eine äußere Mantelfläche **31,** eine innere Mantelfläche **32** und eine Stirnfläche **33.** Am Übergang vom Bohrschaft 16 zum inneren Steckelement 17 befindet sich eine ringförmige Anschlagschulter **34.**

Das innere Steckelement 17 weist parallel zur Drehachse 22 eine Länge **l**₂ und senkrecht zur Drehachse 22 eine Breite **b**₂ auf. Das Stiftelement 25 ist kreiszylinderförmig mit einem Stiftradius **Rz** parallel zur Drehachse 22 und einer Stifthöhe **Hz** senkrecht zur Drehachse 22 ausgebildet. Die Unterkante des Stiftelementes 25 befindet sich parallel zur Drehachse 22 in einem Abstand **A_{z}** zur Stirnfläche 33 des inneren Steckelementes 17.

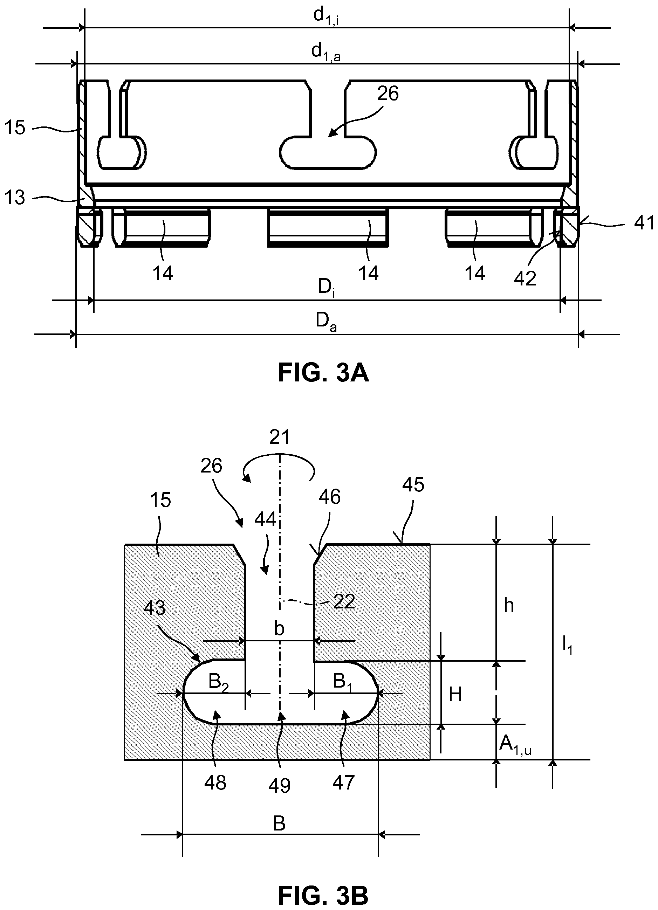

**FIGN. 3A****, B** zeigen den Schneidabschnitt 11 der in FIG. 1 gezeigten Bohrkrone 10 in einem Längsschnitt parallel zur Zeichenebene von FIG. 1A. Dabei zeigt FIG. 3A den gesamten Schneidabschnitt 11 und FIG. 3B eine schlitzförmige Ausnehmung 26 im äußeren Steckelement 15 in vergrößerter Darstellung.

Der Schneidabschnitt 11 umfasst den Ringabschnitt 13, die Schneidelemente 14 und das äußere Steckelement 15. Der Ringabschnitt 13 und das äußere Steckelement 15 sind in der gezeigten Ausführung monolithisch ausgebildet. Alternativ zur monolithischen Ausbildung kann das äußere Steckelement 15 als separates Teil ausgebildet sein und anschließend mit dem Ringabschnitt 13 verbunden werden.

Die Schneidelemente 14 sind in einer Ebene senkrecht zur Drehachse 22 ringförmig um den Ringabschnitt 13 angeordnet und weisen jeweils eine Außenkante 41 und eine Innenkante **42** auf. Die Außenkanten 41 der Schneidelemente 14 bilden einen Außenkreis mit einem Außendurchmesser **Dₐ** und die Innenkanten einen Innenkreis mit einem Innendurchmesser **Dᵢ**. Die Schneidelemente 14 erzeugen im Untergrund ein Bohrloch mit einem Bohrlochdurchmesser, der dem Außendurchmesser Dₐ entspricht. Im Inneren der Bohrkrone 10 entsteht ein Bohrkern mit einem Bohrkerndurchmesser, der dem Innendurchmesser Dᵢ entspricht. Das äußere Steckelement 15 weist senkrecht zur Drehachse 22 einen Außendurchmesser **d**_{1,a} und einen Innendurchmesser **d**_{1,i} auf. Dabei sind der Außendurchmesser d_{1,a} des äußeren Steckelementes 15 kleiner als der Außendurchmesser Dₐ und der Innendurchmesser d_{1,i} des äußeren Steckelementes 15 grösser als der Inndurchmesser Dᵢ.

FIG. 3B zeigt eine schlitzförmige Ausnehmung 26 im äußeren Steckelement 15 in vergrößerter Darstellung. Die schlitzförmige Ausnehmung 26 besteht aus einem Querschlitz **43,** der senkrecht zur Drehachse 22 angeordnet ist, und einem Verbindungsschlitz **44,** der parallel zur Drehachse 22 angeordnet ist. Der Verbindungsschlitz 44 verbindet den Querschlitz 43 mit einer Oberkante **45** des äußeren Steckelementes 15, das an der Oberkante 45 im Bereich des Verbindungsschlitzes 44 offen ausgebildet ist. Die Stiftelemente 25 werden über den Verbindungsschlitz 44 in die schlitzförmige Ausnehmung 26 eingeführt und durch eine Drehung um die Drehachse 22 in den Querschlitz 43 verschoben. Die Drehmomentübertragung vom Stiftelement 25 auf das äußere Steckelement 15 erfolgt im Querschlitz 43.

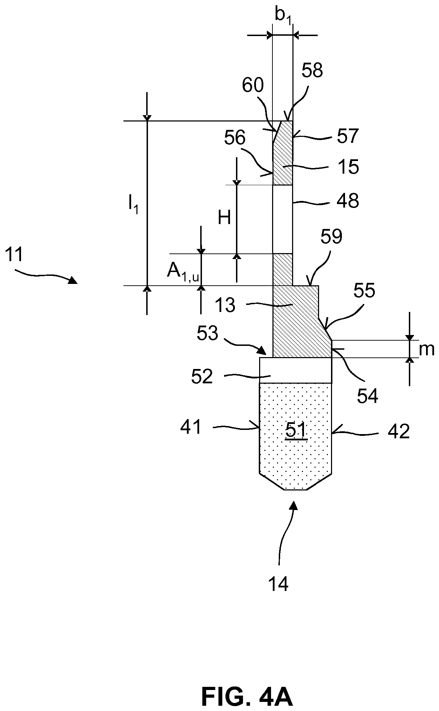

Das äußere Steckelement 15 weist parallel zur Drehachse 22 eine Länge **l₁** und senkrecht zur Drehachse 22 eine Breite **b₁** (FIG. 4A) auf. Der Querschlitz 43 weist senkrecht zur Drehachse 22 eine Breite **B** und parallel zur Drehachse 22 eine Höhe **H** auf. Der Verbindungsschlitz 44 weist senkrecht zur Drehachse 22 eine Breite **b** und parallel zur Drehachse 22 eine Höhe h auf. Die Breite b des Verbindungsschlitzes 44 ist grösser als der Stiftdurchmesser 2R_{z} der Stiftelemente 25, so dass sich die Stiftelemente 25 leicht in den Verbindungsschlitz 44 einführen lassen. Dabei kann das Einführen der Stiftelemente 25 durch eine Einführschräge **46** an der Oberkante 45 erleichtert werden. Die Höhe h des Verbindungsschlitzes 44 wird so gewählt, dass der Schneidabschnitt 11 gegenüber Zugbelastungen beim Lösen einer verklemmten Bohrkrone eine ausreichende Standfestigkeit aufweist. Wird die Höhe h zu gering gewählt, besteht das Risiko einer Verformung des äußeren Steckelementes 15.

Der Querschlitz 43 weist parallel zur Drehachse 22 einen unteren Abstand **A_{1,u}** zum Ringabschnitt 13 und einen oberen Abstand zur Oberkante 45 auf, wobei der obere Abstand der Höhe h des Verbindungsschlitzes 44 entspricht. Der untere Abstand A_{1,u} zum Ringabschnitt 13 wird so gewählt, dass der Schneidabschnitt 11 gegenüber Zugbelastungen durch einen Bohrständer eine ausreichende Standfestigkeit aufweist. Wird der untere Abstand A_{1,u} zu gering gewählt, besteht das Risiko einer Verformung des äußeren Steckelementes 15.

Der Querschlitz 43 umfasst einen Mitnahmebereich **47,** einen Sicherungsbereich **48** und einen Übergangsbereich **49.** Der Mitnahmebereich 47 und der Sicherungsbereich 48 sind bezogen auf die Drehrichtung 21 der Bohrkrone 10 auf verschiedenen Seiten des Verbindungsschlitzes 44 angeordnet, wobei der Mitnahme- und Sicherungsbereich 47, 48 über den Übergangsbereich 49 mit dem Verbindungsschlitz 44 verbunden sind. Der Mitnahmebereich 47 ist auf der, der Drehrichtung 21 zugewandten, Seite des Verbindungsschlitzes 44 angeordnet und der Sicherungsbereich 48 auf der, der Drehrichtung 21 abgewandten, Seite. Die Drehmomentübertragung vom Bohrschaftabschnitt 12 auf den Schneidabschnitt 11 erfolgt über die Stiftelemente 25 und den Mitnahmebereich 47. Der Sicherungsbereich 48 reduziert das Risiko, dass beim Lösen einer verklemmten Bohrkrone aus dem Untergrund die Steck-Dreh-Verbindung 24 zwischen dem Bohrschaftabschnitt 12 und dem Schneidabschnitt 11 unbeabsichtigt geöffnet wird.

Der Mitnahmebereich 47 weist senkrecht zur Drehachse 22 eine Breite **B₁** auf, die Höhe des Mitnahmebereiches 47 entspricht der Höhe H des Querschlitzes 43. Der Sicherungsbereich 48 weist senkrecht zur Drehachse 22 eine Breite **B₂** auf, die Höhe des Sicherungsbereiches 48 entspricht der Höhe H des Querschlitzes 43. Die Breiten B₁, B₂ des Mitnahmebereiches 47 und des Sicherungsbereiches 48 werden so gewählt, dass die Stiftelemente 25 bei einer Zugbelastung im Querschlitz 43 gehalten werden und nicht ausbrechen.

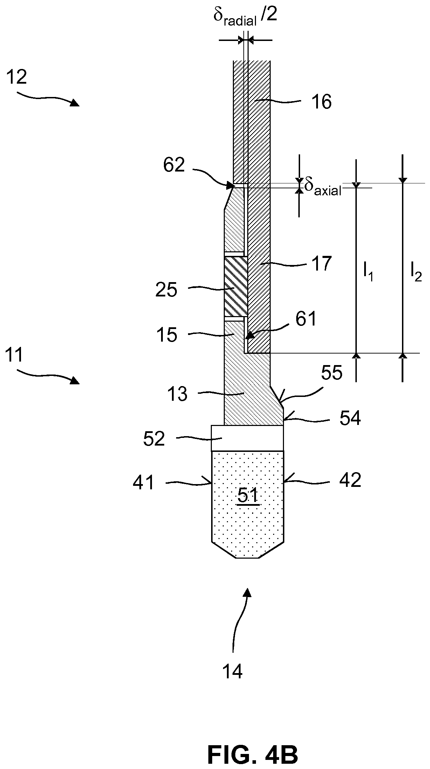

**FIGN. 4A****, B** zeigen den Schneidabschnitt 11 der Bohrkrone 10 in einem Längsschnitt entlang der Schnittebene B-B in FIG. 1A (FIG. 4A) und entlang der Schnittebene C-C in FIG. 1B (FIG. 4B). Der Schneidabschnitt 11 umfasst den Ringabschnitt 13, die Schneidelemente 14 und das äußere Steckelement 15.

Die Schneidelemente 14 sind aus einer Matrixzone **51** und einer Neutralzone **52** aufgebaut, wobei die Matrixzone 51 aus einem mit Schneidpartikeln versetzten Pulverwerkstoff und die Neutralzone 52 aus einem schweißbaren Pulverwerkstoff ohne Schneidpartikel besteht. Der zweiteilige Aufbau der Schneidelemente 14 ist erforderlich, um die Schneidelemente 14 mit dem Ringabschnitt 13 verschweißen zu können. Der Ringabschnitt 13 schließt bündig an die Innenkante 42 des Schneidelementes 14 an und weist gegenüber der Außenkante 41 des Schneidelementes 14 einen Rücksprung **53** auf.

Der Ringabschnitt 13 umfasst an der Innenseite einen Führungsabschnitt **54** und einen Kernentfernungsabschnitt **55.** Der Kernentfernungsabschnitt 55 weist einen Innendurchmesser auf, der in Richtung der Schneidelemente 14 abnimmt, die schräge Fläche des Kernentfernungsabschnittes 55 unterstützt das Entfernen des Bohrkerns. Der Führungsabschnitt 54 schließt bündig an das Schneidelement 14 an und bildet beim Bohren eine Führung für die Schneidelemente 14, parallel zur Drehachse 22 weist der Führungsabschnitt 54 eine Länge m auf. Alternativ zur Führung an der Innenseite der Bohrkrone 10 kann der Führungsabschnitt an der Außenseite oder an der Außen- und Innenseite angeordnet sein. Die Länge m des Führungsabschnittes 54 ist kleiner als 4 mm. Ein Führungsabschnitt, der kleiner als 4 mm ist, behindert die Zufuhr eines Kühl- und Spülmediums nicht oder zumindest nicht wesentlich.

Das äußere Steckelement 15 umfasst eine äußere Mantelfläche **56,** eine innere Mantelfläche **57** und eine Stirnfläche **58.** Am Übergang vom Ringabschnitt 13 zum äußeren Steckelement 15 befindet sich eine ringförmige Anschlagschulter **59.** Bei dem in FIG. 4A gezeigten Schneidabschnitt 11 weist das äußere Steckelement 15 zusätzlich eine schräge Außenfläche **60** auf, deren Durchmesser in Richtung der Schneidelemente 14 zunimmt.

FIG. 4B zeigt den Schneidabschnitt 11 und den Bohrschaftabschnitt 12, die über die Steck-Dreh-Verbindung 24 verbunden sind, wobei das Stiftelement 25 im Sicherungsbereich 48 des Querschlitzes 43 angeordnet ist. Im verbundenen Zustand liegt der Bohrschaftabschnitt 12 mit der Stirnfläche 33 an der Anschlagschulter 59 des Schneidabschnittes 11 an. Zwischen der inneren Mantelfläche 57 des äußeren Steckelementes 15 und der äußeren Mantelfläche 31 des inneren Steckelementes 17 besteht ein radialer Spalt **61.** Dabei ist die Differenz δ_{radial} zwischen dem Innendurchmesser d_{1,i} des äußeren Steckelementes 15 und dem Außendurchmesser d_{2,a} des inneren Steckelementes 17 für alle Durchmesser grösser als 0.11 mm. Die Länge I₂ des inneren Steckelementes 17 ist grösser als die Länge I₁ des äußeren Steckelementes 15, so dass sich zwischen der Stirnfläche 58 des äußeren Steckelementes 15 und der Anschlagschulter 34 des inneren Steckelementes 17 ein axialer Spalt **62** der Spaltbreite **δₐₓᵢₐₗ** bildet. Durch den radialen Spalt 61 und axialen Spalt 62 ist sichergestellt, dass die Stirnfläche 33 des inneren Steckelementes 17 an der Anschlagschulter 59 des äu-ßeren Steckelementes 15 anliegt und beim Bohren eine definierte Kraftübertragung vom Bohrschaftabschnitt auf den Schneidabschnitt erfolgt.

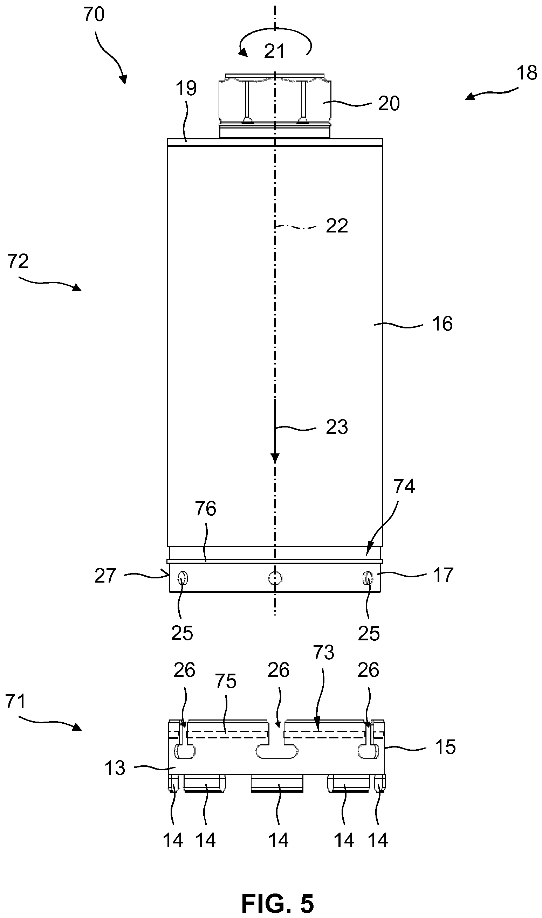

**FIG. 5** zeigt eine erfindungsgemäßen Bohrkrone **70** mit einem Schneidabschnitt **71** und einem Bohrschaftabschnitt **72.** Die Bohrkrone 70 unterscheidet sich von der Bohrkrone 10 dadurch, dass in axialer Richtung eine zusätzliche formschlüssige Verbindung vorgesehen ist, die ein unbeabsichtigtes Lösen des Schneidabschnittes 71 vom Bohrschaftabschnitt 72 erschwert.

Der Schneidabschnitt 71 weist neben dem äußeren Steckelement 15 und den schlitzförmigen Ausnehmungen 26 ein erste Verbindungseinrichtung **73** auf und der Bohrschaftabschnitt 72 weist neben dem inneren Steckelement 17 und den Stiftelementen 25 eine zweite Verbindungseinrichtung **74** auf. Die erste Verbindungseinrichtung 73 umfasst eine Nut **75,** die an der Innenseite 57 des äußeren Steckelementes 15 angeordnet ist. Die zweite Verbindungseinrichtung 74 umfasst eine Nase **76,** die an der Außenseite 28 des inneren Steckelementes 17 angeordnet ist und sich radial nach außen erstreckt. Im verbundenen Zustand der Bohrkrone 70 bilden die Nase 76 und Nut 75 in axialer Richtung d.h. in Bohrrichtung 23, eine formschlüssige Verbindung zwischen dem Schneidabschnitt 71 und dem Bohrschaftabschnitt 72. Der Schneidabschnitt 71 ist mittels der Nase 76 und Nut 75 gegen ein Abziehen des Bohrschaftabschnittes 72 vom Schneidabschnitt 71 gesichert.

Die Nase 76 ist in axialer Richtung zwischen den Stiftelementen 25 und dem Bohrschaft 16 angeordnet. Um den Bohrschaftabschnitt 72 vom Schneidabschnitt 71 zu entfernen, wird auf die Stirnfläche des äußeren Steckelementes 15 mit Hilfe eines Werkzeuges eine Kraft ausgeübt. Durch die Krafteinwirkung wird der federnde Abschnitt des äußeren Steckelementes 15 ausgelenkt und die formschlüssige Verbindung zwischen Nase 76 und Nut 75 kann gelöst werden. Je grösser der Abstand der Nase 76 zu der Stirnfläche 33 des inneren Steckelementes 17 ist, umso grösser ist die Auslenkung des federnden Abschnittes. Die Nut 75 ist ringförmig ausgebildet und in einer Ebene senkrecht zur Drehachse 22 angeordnet. Eine ringförmig ausgebildete Nut, die in axialer Richtung auf Höhe der schlitzförmigen Ausnehmungen 26 angeordnet ist, unterstützt die Federwirkung der Abschnitte des äußeren Steckelementes 15 zwischen den schlitzförmigen Ausnehmungen 26.

Die Haltekraft, die die Nase 76 und Nut 75 aushalten, kann über die Geometrie der Nase 76 und Nut 75 angepasst werden. Das Einrasten der Nase 76 in die Nut 75 soll für den Bediener möglichst komfortabel sein, eine schräge Fläche erleichtert das Einrasten. Als Geometrieparameter zum Einstellen der Haltekraft eignen sich beispielsweise die radiale Höhe der Nase 76, d.h. die Höhe in radialer Richtung, die Kontaktfläche zwischen der Nase 76 und dem inneren Steckelement 17 und der Neigungswinkel.

## Patentansprüche

1. Bohrkrone (10; 70), die in einer Drehrichtung (21) um eine Drehachse (22) drehbar ist, aufweisend:
▪ einen Schneidabschnitt (11; 71) mit einem Ringabschnitt (13), der an einem ersten Ende mit einem oder mehreren Schneidelementen (14) verbunden ist und an einem zweiten Ende ein äußeres Steckelement (15) und eine Anschlagschulter (59) aufweist, wobei das äußere Steckelement (15) eine äußere Mantelfläche (56), eine innere Mantelfläche (57) und eine Stirnfläche (58) umfasst und sich die Anschlagschulter (59) am Übergang vom Ringabschnitt (13) zum äußeren Steckelement (15) befindet,
und
▪ einen Bohrschaftabschnitt (12; 72) mit einem zylinderförmigen Bohrschaft (16), der an einem, dem Schneidabschnitt (11) zugewandten Ende ein inneres Steckelement (17) mit einer Stirnfläche (33) aufweist, wobei die Steckelemente (15, 17) in einer Steckrichtung parallel zur Drehachse (22) eine Steckverbindung bilden und zusätzlich über mindestens ein Stiftelement (25), das in mindestens eine schlitzförmige Ausnehmung (26) bewegbar ist, verbindbar sind,
wobei die Stirnfläche (33) des inneren Steckelementes (17) im verbundenen Zustand an der Anschlagschulter (59) des äußeren Steckelementes (15) anliegt, das mindestens eine Stiftelement (25) an einer Außenseite (27) des inneren Steckelementes (17) befestigt ist und das äußere Steckelement (15) die mindestens eine schlitzförmige Ausnehmung (26) aufweist,
**dadurch gekennzeichnet, dass** sich die mindestens eine schlitzförmige Ausnehmung (26) von der äußeren Mantelfläche (56) zur inneren Mantelfläche (57) erstreckt, an der Au-
ßenseite (24) des inneren Steckelementes (17) eine Nase (76) angeordnet ist an der Innenseite (57) des äußeren Steckelementes (15) eine Nut (75) angeordnet ist, wobei die Nase (76) und Nut (75) im verbundenen Zustand in axialer Richtung eine formschlüssige Verbindung bilden.

2. Bohrkrone nach Anspruch 1, **dadurch gekennzeichnet, dass** die Länge (l₂) des inneren Steckelementes (17) grösser als die Länge (l₁) des äußeren Steckelementes (15) ist.

3. Bohrkrone nach Anspruch 2, **dadurch gekennzeichnet, dass** die Länge (l₁) des äußeren Steckelementes (15) mindestens 18 mm beträgt.

4. Bohrkrone nach Anspruch 3, **dadurch gekennzeichnet, dass** die Länge (l₁) des äußeren Steckelementes (15) nicht grösser als 28 mm ist.

5. Bohrkrone nach Anspruch 1, **dadurch gekennzeichnet, dass** das äußere und innere Steckelement (15, 17) ringförmig ausgebildet sind, wobei die Differenz (δ_{radial}) zwischen einem Innendurchmesser (d_{1,i}) des äußeren Steckelementes (15) und einem Außendurchmesser (d_{2,a}) des inneren Steckelementes (17) grösser als 0.11 mm ist.

6. Bohrkrone nach Anspruch 1, **dadurch gekennzeichnet, dass** an der Außenseite (27) des inneren Steckelementes (17) drei oder mehr Stiftelemente (25) befestigt sind und das äußere Steckelement (15) drei oder mehr schlitzförmige Ausnehmungen (26) aufweist, wobei die Anzahl der Ausnehmungen (26) grösser oder gleich der Anzahl der Stiftelemente (25) ist.

7. Bohrkrone nach Anspruch 1, **dadurch gekennzeichnet, dass** die Stiftelemente (25) senkrecht zur Drehachse (22) eine Stifthöhe (H_{z}) aufweisen, wobei die Stifthöhe (H_{z}) zwischen 68 % und 89 % der Schaftbreite (b) des Bohrschaftes (16) beträgt.

8. Bohrkrone nach Anspruch 7, **dadurch gekennzeichnet, dass** die Stiftelemente (25) kreiszylinderförmig mit einem Stiftradius (R_{z}) ausgebildet sind, wobei der Stiftradius (R_{z}) zwischen 2.5 und 5 mm beträgt.

9. Bohrkrone nach Anspruch 1, **dadurch gekennzeichnet, dass** die schlitzförmige Ausnehmung (26) senkrecht zur Drehachse (22) einen Querschlitz (43) aufweisen, wobei der Querschlitz (43) über einen Verbindungsschlitz (44) mit einer Oberkante (45) des äußeren Steckelementes (15) verbunden ist.

10. Bohrkrone nach Anspruch 9, **dadurch gekennzeichnet, dass** der Querschlitz (43) parallel zur Drehachse (22) einen Abstand (A_{1,u}) zum Ringabschnitt (13) von mindestens 3 mm aufweist.

11. Bohrkrone nach Anspruch 10, **dadurch gekennzeichnet, dass** der Abstand (A_{1,u}) des Querschlitzes (43) zum Ringabschnitt (13) nicht grösser als 5 mm ist.

12. Bohrkrone nach Anspruch 9, **dadurch gekennzeichnet, dass** der Querschlitz (43) einen Mitnahmebereich (47) und einen Sicherungsbereich (48) aufweist, wobei der Mitnahmebereich (47) auf einer, der Drehrichtung (21) zugewandten, Seite und der Sicherungsbereich (48) auf einer, der Drehrichtung (21) abgewandten, Seite des Verbindungsschlitzes (44) mit dem Verbindungsschlitz (44) verbunden ist.

13. Bohrkrone nach Anspruch 12, **dadurch gekennzeichnet, dass** die Breite (B₁) des Mitnahmebereiches (47) nicht kleiner als der Stiftradius (R_{z}) plus 1.5 mm ist.

14. Bohrkrone nach Anspruch 13, **dadurch gekennzeichnet, dass** die Breite (B₁) des Mitnahmebereiches (47) nicht grösser als der Stiftradius (R_{z}) plus 3 mm ist.

15. Bohrkrone nach einem der Ansprüche 12 bis 14, **dadurch gekennzeichnet, dass** die Breite (B₁) des Mitnahmebereiches (47) und die Breite (B₂) des Sicherungsbereiches (48) übereinstimmen.

16. Bohrkrone nach einem der Ansprüche 12 bis 14, **dadurch gekennzeichnet, dass** die Breite (B₁) des Mitnahmebereiches (47) grösser als die Breite (B₂) des Sicherungsbereiches (48) ist.

17. Bohrkrone nach Anspruch 9, **dadurch gekennzeichnet, dass** die Höhe (h) des Verbindungsschlitzes (44) parallel zur Drehachse (22) mindestens 10 mm beträgt.

18. Bohrkrone nach Anspruch 17, **dadurch gekennzeichnet, dass** die Höhe (h) des Verbindungsschlitzes (44) parallel zur Drehachse (22) nicht grösser als 13 mm ist.

19. Bohrkrone nach Anspruch 1, **dadurch gekennzeichnet, dass** der Ringabschnitt (13) einen Führungsabschnitt (54) aufweist, wobei der Führungsabschnitt (54) parallel zur Längsachse (22) bündig an eine Außenkante (41), eine Innenkante (42) oder an eine Außen- und Innenkante (41, 42) der Schneidelemente (14) anschließt.

20. Bohrkrone nach Anspruch 19, **dadurch gekennzeichnet, dass** die Länge (m) des Führungsabschnittes (54) parallel zur Drehachse (22) kleiner als 4 mm ist.

21. Bohrkrone nach Anspruch 1, **dadurch gekennzeichnet, dass** die Nase (76) in axialer Richtung zwischen den Stiftelementen (25) und dem Bohrschaft (16) angeordnet ist und die Nut (75) in axialer Richtung auf Höhe der schlitzförmigen Ausnehmungen (26) angeordnet ist.

22. Bohrkrone nach Anspruch 21, **dadurch gekennzeichnet, dass** die Nut (75) ringförmig ausgebildet ist und in einer Ebene senkrecht zur Drehachse (22) angeordnet ist.

## Claims

1. Drill bit (10; 70) which in a rotation direction (21) is rotatable about a rotation axis (22), having:
• a cutting portion (11; 71) having a ring portion (13) which at a first end is connected to one or a plurality of cutting elements (14), and at a second end comprises an outer plug element (15) and a detent shoulder (59), wherein the outer plug element (15) has an outer shell face (56), an inner shell face (57), and an end face (58), and the detent shoulder (59) is situated at the transition from the ring portion (13) to the outer plug element (15), and
• a drill shank portion (12; 72) having a cylindrical drill shank (16) which on an end facing the cutting portion (11) has an inner plug element (17) having an end face (33), wherein the plug elements (15, 17) in a plug-in direction parallel to the rotation axis (22) form a plug connection and are additionally connectable by way of at least one pin element (25), which is movable into at least one slot-shaped clearance (26),
wherein the end face (33) of the inner plug element (17) in the connected state bears on the detent shoulder (59) of the outer plug element (15), the at least one pin element (25) being fastened to an outside (27) of the inner plug element (17), and the outer plug element (15) having the at least one slot-shaped clearance (26),
**characterized in that** the at least one slot-shaped clearance (26) extends from the outer shell face (56) to the inner shell face (57), a cam (76) is disposed on the outside (24) of the inner plug element (17), a groove (75) is disposed on the inside (57) of the outer plug element (15), wherein the cam (76) and groove (75), in the connected state, in the axial direction form a form-fitting connection.

2. Drill bit according to Claim 1, **characterized in that** the length (l₂) of the inner plug element (17) is greater than the length (l₁) of the outer plug element (15).

3. Drill bit according to Claim 2, **characterized in that** the length (li) of the outer plug element (15) is at least 18 mm.

4. Drill bit according to Claim 3, **characterized in that** the length (li) of the outer plug element (15) is not more than 28 mm.

5. Drill bit according to Claim 1, **characterized in that** the outer and the inner plug element (15, 17) are configured to be annular, wherein the difference (δ_{radial}) between an internal diameter (d_{1,i}) of the outer plug element (15) and an external diameter (d_{2,a}) of the inner plug element (17) is more than 0.11 mm.

6. Drill bit according to Claim 1, **characterized in that** three or more pin elements (25) are fastened to the outside (27) of the inner plug element (17), and the outer plug element (15) has three or more slot-shaped clearances (26), wherein the number of clearances (26) is greater than or equal to the number of pin elements (25).

7. Drill bit according to Claim 1, **characterized in that** the pin elements (25), perpendicularly to the rotation axis (22), have a pin height (Hz), wherein the pin height (H_{Z}) is between 68% and 89% of the shank width (b) of the drill shank (16).

8. Drill bit according to Claim 7, **characterized in that** the pin elements (25) are configured to be circular-cylindrical having a pin radius (Rz), wherein the pin radius (R_{Z}) is between 2.5 and 5 mm.

9. Drill bit according to Claim 1, **characterized in that** the slot-shaped clearances (26), perpendicularly to the rotation axis (22), have a transverse slot (43), wherein the transverse slot (43) by way of a connection slot (44) is connected to an upper edge (45) of the outer plug element (15).

10. Drill bit according to Claim 9, **characterized in that** the transverse slot (43), parallel to the rotation axis (22), has a spacing (A_{1,u}) of at least 3 mm from the ring portion (13).

11. Drill bit according to Claim 10, **characterized in that** the spacing (A_{1,u}) of the transverse slot (43) from the ring portion (13) is not more than 5 mm.

12. Drill bit according to Claim 9, **characterized in that** the transverse slot (43) has an entrainment region (47) and a securing region (48), wherein the entrainment region (47) on a side of the connection slot (44) that faces the rotation direction (21), and the securing region (48) on a side of the connection slot (44) that faces away from the rotation direction (21), are connected to the connection slot (44).

13. Drill bit according to Claim 12, **characterized in that** the width (B₁) of the entrainment region (47) is not smaller than the pin radius (R_{Z}) plus 1.5 mm.

14. Drill bit according to Claim 13, **characterized in that** the width (B₁) of the entrainment region (47) is not larger than the pin radius (R_{Z}) plus 3 mm.

15. Drill bit according to one of Claims 12 to 14, **characterized in that** the width (B₁) of the entrainment region (47) and the width (B₂) of the securing region (48) are identical.

16. Drill bit according to one of Claims 12 to 14, **characterized in that** the width (B₁) of the entrainment region (47) is larger than the width (B₂) of the securing region (48).

17. Drill bit according to Claim 9, **characterized in that** the height (h) of the connection slot (44) parallel to the rotation axis (22) is at least 10 mm.

18. Drill bit according to Claim 17, **characterized in that** the height (h) of the connection slot (44) parallel to the rotation axis (22) is not more than 13 mm.

19. Drill bit according to Claim 1, **characterized in that** the ring portion (13) has a guide portion (54), wherein the guide portion (54), parallel to the longitudinal axis (22), sits flush with an external edge (41), an internal edge (42), or an external and an internal edge (41, 42) of the cutting elements (14).

20. Drill bit according to Claim 19, **characterized in that** the length (m) of the guide portion (54) parallel to the rotation axis (22) is smaller than 4 mm.

21. Drill bit according to Claim 1, **characterized in that** the cam (76) in the axial direction is disposed between the pin elements (25) and the drill shank (16), and the groove (75) in the axial direction is disposed so as to be level with the slot-shaped clearances (26).

22. Drill bit according to Claim 21, **characterized in that** the groove (75) is configured to be annular and is disposed in a plane perpendicular to the rotation axis (22)

## Revendications

1. Couronne de forage (10 ; 70), qui peut tourner autour d'un axe de rotation (22) dans un sens de rotation (21), présentant :
▪ une partie de coupe (11 ; 71) dotée d'une partie annulaire (13) qui est reliée à un ou plusieurs éléments de coupe (14) à une première extrémité et présente un élément enfichable extérieur (15) et un épaulement de butée (59) à une deuxième extrémité, l'élément enfichable extérieur (15) comprenant une surface d'enveloppe extérieure (56), une surface d'enveloppe intérieure (57) et une surface frontale (58) et l'épaulement de butée (59) se trouvant à la transition de la partie annulaire (13) à l'élément enfichable extérieur (15),
et
▪ une partie de tige de forage (12 ; 72) dotée d'une tige de forage cylindrique (16), qui présente, à une extrémité tournée vers la partie de coupe (11), un élément enfichable intérieur (17) doté d'une surface frontale (33), les éléments enfichables (15, 17) formant une liaison enfichable dans une direction d'enfichage parallèle à l'axe de rotation (22) et pouvant être reliés en outre par le biais d'au moins un élément goupille (25) qui est déplaçable dans au moins un évidement (26) en forme de fente,
la surface frontale (33) de l'élément enfichable intérieur (17), dans l'état relié, s'appuyant contre l'épaulement de butée (59) de l'élément enfichable extérieur (15), l'au moins un élément goupille (25) étant fixé à un côté extérieur (27) de l'élément enfichable intérieur (17) et l'élément enfichable extérieur (15) présentant l'au moins un évidement (26) en forme de fente,
**caractérisée en ce que** l'au moins un évidement (26) en forme de fente s'étend de la surface d'enveloppe extérieure (56) à la surface d'enveloppe intérieure (57), un ergot (76) est disposé sur le côté extérieur (24) de l'élément enfichable intérieur (17), une rainure (75) est disposée sur le côté intérieur (57) de l'élément enfichable extérieur (15), l'ergot (76) et la rainure (75) formant une liaison par complémentarité de formes dans la direction axiale dans l'état relié.

2. Couronne de forage selon la revendication 1, **caractérisée en ce que** la longueur (l₂) de l'élément enfichable intérieur (17) est supérieure à la longueur (l₁) de l'élément enfichable extérieur (15).

3. Couronne de forage selon la revendication 2, **caractérisée en ce que** la longueur (l₁) de l'élément enfichable extérieur (15) vaut au moins 18 mm.

4. Couronne de forage selon la revendication 3, **caractérisée en ce que** la longueur (l₁) de l'élément enfichable extérieur (15) n'est pas supérieure à 28 mm.

5. Couronne de forage selon la revendication 1, **caractérisée en ce que** les éléments enfichables extérieur et intérieur (15, 17) sont de forme annulaire, la différence (δ_{radial}) entre un diamètre intérieur (d_{1,i}) de l'élément enfichable extérieur (15) et un diamètre extérieur (d_{2,a}) de l'élément enfichable intérieur (17) n'étant pas supérieure à 0,11 mm.

6. Couronne de forage selon la revendication 1, **caractérisée en ce que** trois éléments goupilles (25) ou plus sont fixés au côté extérieur (27) de l'élément enfichable intérieur (17) et l'élément enfichable extérieur (15) présente trois évidements (26) en forme de fentes ou plus, le nombre d'évidements (26) étant supérieur ou égal au nombre d'éléments goupilles (25).

7. Couronne de forage selon la revendication 1, **caractérisée en ce que** les éléments goupilles (25) présentent une hauteur de goupille (H_{z}) perpendiculairement à l'axe de rotation (22), la hauteur de goupille (H_{z}) valant entre 68 % et 89 % de la largeur de tige (b) de la tige de forage (16).

8. Couronne de forage selon la revendication 7, **caractérisée en ce que** les éléments goupilles (25) sont de forme annulaire circulaire avec un rayon de goupille (R_{z}), le rayon de goupille (R_{z}) valant entre 2,5 et 5 mm.

9. Couronne de forage selon la revendication 1, **caractérisée en ce que** l'évidement (26) en forme de fente présente une fente transversale (43) perpendiculairement à l'axe de rotation (22), la fente transversale (43) étant reliée par le biais d'une fente de liaison (44) à une arête supérieure (45) de l'élément enfichable extérieur (15).

10. Couronne de forage selon la revendication 9, **caractérisée en ce que** la fente transversale (43) présente parallèlement à l'axe de rotation (22) une distance (A_{1,u}) à la partie annulaire (13) d'au moins 3 mm.

11. Couronne de forage selon la revendication 10, **caractérisée en ce que** la distance (A_{1,u}) de la fente transversale (43) à la partie annulaire (13) n'est pas supérieure à 5 mm.

12. Couronne de forage selon la revendication 9, **caractérisée en ce que** la fente transversale (43) présente une région d'entraînement (47) et une région de blocage (48), la région d'entraînement (47) étant, sur un côté tourné vers le sens de rotation (21), et la région de blocage (48) étant, sur un côté, opposé au sens de rotation (21), de la fente de liaison (44), reliées à la fente de liaison (44).

13. Couronne de forage selon la revendication 12, **caractérisée en ce que** la largeur (B₁) de la région d'entraînement (47) n'est pas inférieure au rayon de goupille (R_{z}) plus 1,5 mm.

14. Couronne de forage selon la revendication 13, **caractérisée en ce que** la largeur (B₁) de la région d'entraînement (47) n'est pas supérieure au rayon de goupille (R_{z}) plus 3 mm.

15. Couronne de forage selon l'une des revendications 12 à 14, **caractérisée en ce que** la largeur (B₁) de la région d'entraînement (47) et la largeur (B₂) de la région de blocage (48) coïncident.

16. Couronne de forage selon l'une des revendications 12 à 14, **caractérisée en ce que** la largeur (B₁) de la région d'entraînement (47) est supérieure à la largeur (B₂) de la région de blocage (48).

17. Couronne de forage selon la revendication 9, **caractérisée en ce que** la hauteur (h) de la fente de liaison (44) parallèlement à l'axe de rotation (22) vaut au moins 10 mm.

18. Couronne de forage selon la revendication 17, **caractérisée en ce que** la hauteur (h) de la fente de liaison (44) parallèlement à l'axe de rotation (22) n'est pas supérieure à 13 mm.

19. Couronne de forage selon la revendication 1, **caractérisée en ce que** la partie annulaire (13) présente une partie de guidage (54), la partie de guidage (54) se raccordant en affleurement à une arête extérieure (41), une arête intérieure (42) ou à une arête extérieure et une arête intérieure (41, 42) des éléments de coupe (14) parallèlement à l'axe longitudinal (22).

20. Couronne de forage selon la revendication 19, **caractérisée en ce que** la longueur (m) de la partie de guidage (54) parallèlement à l'axe de rotation (22) est inférieure à 4 mm.

21. Couronne de forage selon la revendication 1, **caractérisée en ce que** l'ergot (76) est disposé entre les éléments goupilles (25) et la tige de forage (16) dans la direction axiale et la rainure (75) est disposée à hauteur des évidements (26) en forme de fentes dans la direction axiale.

22. Couronne de forage selon la revendication 21, **caractérisée en ce que** la rainure (75) est de forme annulaire et est disposée dans un plan perpendiculaire à l'axe de rotation (22).
